Europäisches Patentamt

European Patent Office

Office européen des brevets

(11) Veröffentlichungsnummer: **0 273 103 B1**

# EUROPÄISCHE PATENTSCHRIFT

(45) Veröffentlichungstag der Patentschrift: **23.10.91**

(51) Int. Cl.⁵: **G01D 3/04, G01R 1/44**

(21) Anmeldenummer: **87111630.7**

(22) Anmeldetag: **11.08.87**

(54) Schaltungsanordnung für einen Sensor.

(30) Priorität: **25.11.86 DE 3640242**

(43) Veröffentlichungstag der Anmeldung:
**06.07.88 Patentblatt 88/27**

(45) Bekanntmachung des Hinweises auf die
Patenterteilung:
**23.10.91 Patentblatt 91/43**

(84) Benannte Vertragsstaaten:
**DE FR GB IT SE**

(56) Entgegenhaltungen:
**EP-A- 0 129 817**
**DE-A- 3 418 906**

**U. Tietze, Ch. Schenk,**
**"Halbleiter-Schaltungstechnik", 5. Auflage,**
**Springer 1980, Berlin, DE, S. 103, 193**

(73) Patentinhaber: **VDO Adolf Schindling AG**
**Gräfstrasse 103**
**W-6000 Frankfurt/Main 90(DE)**

(72) Erfinder: **Hannappel, Joachim**
**Blumenstrasse 21**
**W-6251 Waldbrunn(DE)**
Erfinder: **Pfeifer, Thomas**
**Burgstrasse 6**
**W-6235 Eppstein(DE)**

(74) Vertreter: **Klein, Thomas, Dipl.-Ing. (FH)**
**Sodener Strasse 9 Postfach 6140**
**W-6231 Schwalbach a. Ts.(DE)**

Rank Xerox (UK) Business Services

## Beschreibung

Die Erfindung betrifft eine Schaltungsanordnung zur Temperatur-Kompensation des Signals eines Sensors, der ein zu einer physikalischen Größe analoges elektrisches Signal liefert, bei dem sowohl die Empfindlichkeit, als auch eine additive Komponente (sogenannter Offset) von der Temperatur abhängig sind.

Zur Erfassung verschiedener physikalischer Größen, beispielsweise eines Druckes, einer magnetischen Feldstärke oder einer Strömungsgeschwindigkeit, sind Sensoren bekannt, welche ein der physikalischen Größe analoges elektrisches Ausgangssignal liefern. Dabei ist jedoch häufig das Ausgangssignal nicht nur von der zu erfassenden Größe, sondern auch von der Temperatur abhängig. Diese Temperaturabhängigkeit besteht meistens darin, daß einerseits die Empfindlichkeit des Sensors, also die Veränderung des Ausgangssignals bei einer vorgegebenen Veränderung der zu erfassenden Größe und andererseits eine additive Komponente (sogenannter Offset) von der Temperatur abhängig sind. Dabei ergeben sich Streuungen zwischen den hergestellten Exemplaren von Sensoren gleichen Typs, so daß bei der Anwendung der Sensoren Schaltungen mit einer Kompensation der Temperaturfehler erforderlich werden, wobei der Grad der jeweiligen Kompensation abgleichbar ist. Bei den bisher verwendeten Schaltungen beeinflussen sich jedoch die Einstellungen untereinander, so daß zum Abgleich ein iteratives und damit zeitraubendes Verfahren notwendig ist.

Bei einer bekannten Schaltung mit Hall-Generator (EP-A-0 129 817) wird als Ausgangsgröße für die Korrektur des temperaturabhängigen Signals der innere Widerstand des Sensors benutzt, der bei Hall-Generatoren in der Regel einen (hohen) positiven Temperaturkoeffizienten aufweist. Diese Ausgangsgröße steht bei Sensoren mit einer Konstantspannungsversorgung nicht zur Verfügung, weil bei derartigen Schaltungen die Temperaturabhängigkeit des Innenwiderstandes kaum meßbar ist. Hinzukommt, daß in vielen Fällen eine Kompensation der Temperatureinflüsse über eine Steigerung des Steuerstroms nicht möglich ist, weil die verfügbare Versorgungsspannung nicht in dem erforderlichen Umfang erhöht werden kann, wie es für eine Kompensation des erhöhten Innenwiderstandes durch einen entsprechend erhöhten Steuerstrom notwendig wäre (z.B. bei Kraftfahrzeug-Meßwertgebern).

Aufgabe der vorliegenden Erfindung ist es, eine Schaltungsanordnung für einen Sensor anzugeben, die die vorgenannten Anwendungseinschränkungen nicht aufweist und die einen unabhängigen Abgleich der Kompensation des Temperaturfehlers der Empfindlichkeit und des Offsets ermöglicht.

Die erfindungsgemäße Schaltungsanordnung ist gekennzeichnet durch

a) einen Sensor mit zwei Eingängen für die Spannungsversorgung und zwei Ausgängen für das Signal,

b) einen ersten Differenzverstärker, dessen Eingänge über Widerstände mit den Ausgängen des Sensors verbunden sind, dessen nicht invertierender Eingang außerdem über einen Widerstand an Massepotential angeschlossen ist und in dessen Gegenkopplungszweig ein Widerstandsnetzwerk mit einem temperaturabhängigen Widerstand angeordnet ist.

c) einen zweiten Differenzverstärker, dessen nichtinvertierender Eingang über einen Widerstand mit dem Ausgang des ersten Differenzverstärkers, über einen Widerstand mit einem temperaturabhängigen Spannungsteiler und über einen Widerstand mit Massepotential verbunden ist, und dessen invertierender Eingang über einen Widerstand mit dem temperaturabhängigen Spannungsteiler und über einen Widerstand mit einem weiteren Spannungsteiler verbunden ist sowie durch

d) ein im Gegenkopplungszweig des zweiten Differenzverstärkers angeordnetes, aus Widerständen bestehendes T-Glied.

Die erfindungsgemäße Schaltungsanordnung ermöglicht voneinander unabhängige Einstellungen der Temperaturabhängigkeiten von Offset und Empfindlichkeit. Dadurch ist ein wesentlich einfacherer Abgleich der Schaltung gegeben. Sie hat ferner den Vorteil, daß bei gegebenen Genauigkeitsanforderungen auch Temperaturfehler von Sensoren kompensiert werden können, die bei der Verwendung von anderen Schaltungsanordnungen als Ausschuß zu bewerten wären.

Eine vorteilhafte Ausgestaltung der Erfindung besteht darin, daß das Widerstandsnetzwerk im Gegenkopplungszweig des ersten Differenzverstärkers aus einem T-Glied besteht, bei dem ein temperaturabhängiger Widerstand und zwei abgleichbare Widerstände den Längszweig und ein weiterer abgleichbarer Widerstand den Querzweig bilden. Außerdem ist vorgesehen, daß die Widerstände des weiteren Spannungsteilers abgleichbar sind. Schließlich ist es zweckmäßig, wenn auch die Widerstände des im Gegenkopplungszweig des zweiten Differenzverstärkers angeordneten T-Gliedes abgleichbar sind.

Nach einer anderen Weiterbildung der Erfindung ist schließlich vorgesehen, daß sowohl die Leitung der Spannungsversorgung als auch die Ausgangsleitung des kompensierten Signals je einen Kondensator aufweist.

Die Erfindung läßt zahlreiche Ausführungsformen zu. Eine davon ist schematisch in der Zeichnung an Hand mehrerer Figuren dargestellt und nachfolgend beschrieben. Es zeigt:

Fig. 1    ein Diagramm zur Darstellung der Abhängigkeit der Ausgangsspannung eines Drucksensors vom Druck und von der Temperatur und

Fig. 2    ein Schaltbild.

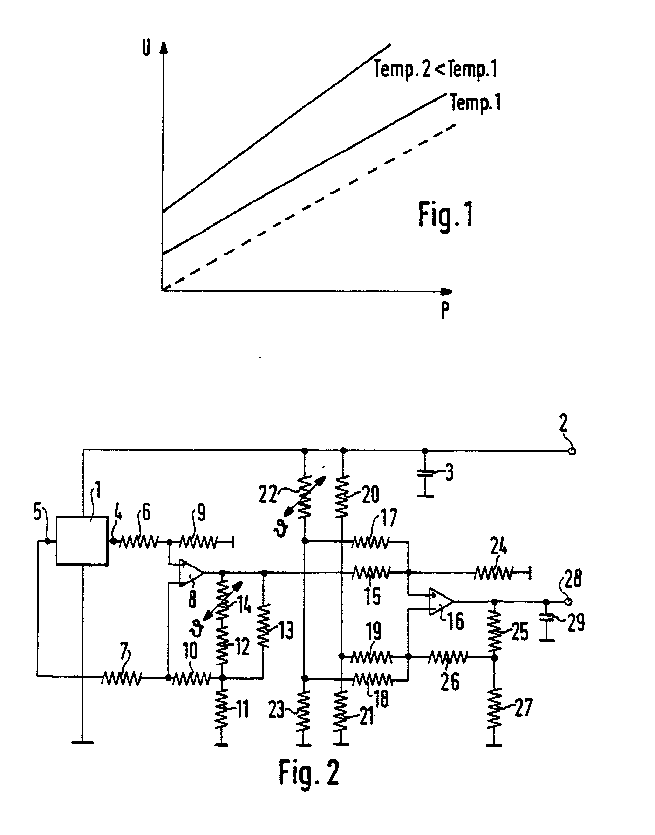

Wie aus Fig. 1 hervorgeht, steigt die Ausgangsspannung U des Drucksensors in Abhängigkeit vom Druck P bei einer geringen Temperatur Temp 2 stärker an als bei einer höheren Temperatur Temp 1. Außerdem ist der Offset, d. h. die Ausgangsspannung beim Wert P = 0 temperaturabhängig. Die Ausgangsspannung der erfindungsgemäßen Schaltung soll jedoch weitgehend temperaturunabhängig sein. Außerdem ist ein sogenannter Null-Offset vorteilhaft, wie es mit der gestrichelten Geraden dargestellt ist.

Fig. 2 stellt eine Schaltungsanordnung dar, welche an einen piezoresistiven Drucksensor 1 angepaßt ist, grundsätzlich jedoch auch für andere Sensoren geeignet ist. Der Sensor 1 erhält über einen Anschluß 2 eine Betriebsspannung, wobei ein Kondensator 3 mögliche Spannungsspitzen aussiebt. Die Ausgangsanschlüsse 4, 5 des Sensors 1 sind über je einen Widerstand 6, 7 mit den Eingängen eines Differenzverstärkers 8 verbunden. Der nichtinvertierende Eingang des Differenzverstärkers 8 ist ferner über einen Widerstand 9 an Massepotential angeschlossen.

Zwischen dem Ausgang und dem invertierenden Eingang des Differenzverstärkers 8, also in dessen Gegenkopplungszweig, ist ein Widerstandsnetzwerk angeordnet, das aus den Widerständen 10, 11, 12, 13 sowie einem temperaturabhängigen Widerstand 14 besteht. Letzterer bewirkt, daß der resultierende Verstärkungsfaktor temperaturabhängig ist.

Somit wird die Empfindlichkeit des Sensors temperaturkompensiert. Dieses setzt voraus, daß der temperaturabhängige Widerstand 14 jeweils die gleiche Temperatur wie der Sensor 1 aufweist. Das ist in vorteilhafter Weise gewährleistet, wenn die erfindungsgemäße Schaltungsanordnung in Miniaturtechnik aufgebaut ist und zusammen mit dem Sensor eine kompakte Baueinheit bildet. Hierfür eignet sich in vorteilhafter Weise die Hybridtechnik, bei der die passiven Bauelemente einschließlich der Verdrahtungen als Filmschaltungen hergestellt sind, wobei die aktiven Bauelemente, also die Operationsverstärker als Chip-Elemente eingesetzt sind.

Die Ausgangsspannung des Differenzverstärkers 8 wird über einen Widerstand 15 dem nichtinvertierenden Eingang eines weiteren Differenzverstärkers 16 zugeführt. Dieser bildet zusammen mit dem Widerstand 15 und den Widerständen 17, 18 und 19 eine Addier- bzw. Subtrahierschaltung, welcher einerseits mit Hilfe des Spannungsteilers 20, 21 eine weitgehend temperaturunabhängige Spannung und andererseits mit Hilfe des Spannungsteilers 22, 23 eine temperaturabhängige Spannung zugeführt wird. Dazu ist der Widerstand 22 als temperaturabhängiger Widerstand ausgeführt.

Der nichtinvertierende Eingang des Differenzverstärkers 16 ist ferner über einen Widerstand 24 mit Massepotential verbunden. Zwischen dem Ausgang und dem invertierenden Eingang des Differenzverstärkers 16 ist ein aus den Widerständen 25, 26 und 27 bestehendes T-Glied geschaltet, welches im wesentlichen den Verstärkungsfaktor des weiteren Differenzverstärkers 16 bestimmt. Am Ausgang 28 ist die Ausgangsspannung der Schaltungsanordnung entnehmbar. Um Störungen durch Spannungsspitzen zu verhindern, ist der Ausgang 28 über einen Kondensator 29 mit Massepotential verbunden.

Zum Abgleich der Schaltungsanordnung wird bei einer ersten Temperatur, beispielsweise 85 °C, und einem vorgegebenem Druck die Ausgangsspannung des Differenzverstärkers gemessen bzw. durch die Einstellung des Widerstandes 11 auf einen Sollwert gebracht. Danach wird bei gleichem Druck jedoch bei einer anderen Temperatur, beispielsweise Raumtemperatur, die gleiche Ausgangsspannung durch Abgleich der Widerstände 12 bzw. 13 eingestellt. Damit ist der Grad der Kompensation der Temperaturabhängigkeit der Empfindlichkeit des Sensors abgeglichen.

Der Grad der Kompensation der Temperaturabhängigkeit der Offsetspannung des Drucksensors 1 wird durch Einstellen der Werte der Widerstände 17 und 18 ebenfalls bei einem vorgegebenen Wert für den Druck und bei verschiedenen Temperaturen eingestellt. Danach wird die Offsetspannung bei einer vorgegebenen Temperatur durch den Abgleich des Verhältnisses der Widerstände 20 und 21 kompensiert.

Mit Hilfe der Widerstände 25, 26 und 27 kann die Gesamtverstärkung der Schaltungsanordnung eingestellt werden. Der Abgleich der einzelnen Widerstände erfolgt vorzugsweise mit Laserstrahlen.

## Patentansprüche

1. Schaltungsanordnung zur Temperatur-Kompensation des Signals eines Sensors, der ein zu einer physikalischen Größe analoges elektrisches Signal liefert, bei dem sowohl die Empfindlichkeit als auch eine additive Komponente der sogenannte Offset, von der Temperatur abhängig sind, gekennzeichnet durch

a) einen Sensor (1) mit zwei Eingängen für die Spannungsversorgung (2) und zwei Ausgängen (4, 5) für das Signal,

b) einen ersten Differenzverstärker (8), dessen Eingänge über Widerstände (6, 7) mit den Ausgängen (4, 5) des Sensors (1) verbunden sind, dessen nicht invertierender Eingang außerdem über einen Widerstand (9) an Massepotential angeschlossen ist und in dessen Gegenkopplungszweig ein Widerstandsnetzwerk (10-14) mit einem temperaturabhängigen Widerstand (14) angeordnet ist,

c) einen zweiten Differenzverstärker (16), dessen nichtinvertierender Eingang über einen Widerstand (15) mit dem Ausgang des ersten Differenzverstärkers (8), über einen Widerstand (17) mit einem temperaturabhängigen Spannungsteiler (22, 23) und über einen Widerstand (24) mit Massepotential verbunden ist, und dessen invertierender Eingang über einen Widerstand (18) mit dem temperaturabhängigen Spannungsteiler (22, 23) und über einen Widerstand (19) mit einem weiteren Spannungsteiler (20, 21) verbunden ist sowie durch

d) ein im Gegenkopplungszweig des zweiten Differenzverstärkers (16) angeordnetes, aus Widerständen (25, 26, 27) bestehendes T-Glied.

2. Schaltungsanordnung nach Anspruch 1, dadurch gekennzeichnet, daß das Widerstandsnetzwerk im Gegenkopplungszweig des ersten Differenzverstärkers (8) aus einem T-Glied besteht, bei dem ein temperaturabhängiger Widerstand (14) und zwei abgleichbare Widerstände (12, 13) den Längszweig und ein weiterer abgleichbarer Widerstand (11) den Querzweig bilden.

3. Schaltungsanordnung nach Anspruch 1 oder 2, dadurch gekennzeichnet, daß die Widerstände (20, 21) des weiteren Spannungsteilers abgleichbar sind.

4. Schaltungsanordnung nach einem der Ansprüche 1 bis 3, dadurch gekennzeichnet, daß die Widerstände (25, 26, 27) des im Gegenkopplungszweig des zweiten Differenzverstärkers (16) angeordneten T-Gliedes abgleichbar sind.

5. Schaltungsanordnung nach einem der Ansprüche 1 bis 4, dadurch gekennzeichnet, daß die Leitung der Spannungsversorgung (2) und die Ausgangsleitung (28) des kompensierten Signals je einen Kondensator (3, 29) aufweisen.

## Claims

1. Circuit arrangement for the temperature compensation of the signal from a sensor, which supplies an electrical signal analogous to a physical variable, in which both the sensitivity and an additive component, the so-called Offset, are dependent on the temperature, characterised by

a) a sensor (1), having two inputs for the supply voltage (2) and two outputs (4, 5) for the signal,

b) a first differential amplifier (8), whose inputs are connected via resistors (6, 7) to the outputs (4, 5) of the sensor (1), whose non-inverting input is moreover connected via a resistor (9) to earth potential and in whose negative feedback path a resistor network (10-14) with a temperature-dependent resistor (14) is arranged,

c) a second differential amplifier (16), whose non-inverting input is connected via a resistor (15) to the output of the first differential amplifier (8), via a resistor (17) to a temperature-dependent voltage divider (22, 23) and via a resistor (24) to earth potential, and whose inverting input is connected via a resistor (18) to the temperature-dependent voltage divider (22, 23) and via a resistor (19) to a further voltage divider (20, 21), and by

d) a T-Element consisting of resistors (25, 26, 27), arranged in the negative feedback path of the second differential amplifier (16).

2. Circuit arrangement according to Claim 1, characterised in that the resistor network in the negative feedback path of the first differential amplifier (8) consists of a T-Element, the longitudinal path through which is formed by a temperature-dependent resistor (14) and two adjustable resistors (12, 13), the lateral path being formed by a further adjustable resistor (11).

3. Circuit arrangement according to Claim 1 or Claim 2, characterised in that the resistors (20, 21) in the further voltage divider are adjustable.

4. Circuit arrangement according to one of Claims 1 to 3, characterised in that the resistors (25, 26, 27) the T-Element arranged in the negative feedback path of the second differential amplifier (16) are adjustable.

5. Circuit arrangement according to one of Claims 1 to 4, characterised in that the voltage supply line (2) and the compensated signal output line (28) each have a capacitor (3, 29).

## Revendications

1. Agencement de circuit pour la compensation de l'effet de la température sur un signal d'un capteur qui fournit un signal électrique analogique représentant une grandeur physique, agencement dans le cas duquel aussi bien la sensibilité qu'une composante supplémentaire, ce que l'on appelle la valeur à l'origine, sont fonction de la température, agencement caractérisé par

   a) un capteur (1) comportant deux entrées pour l'alimentation en tension (2) et deux sorties (4, 5) pour le signal,

   b) un premier amplificateur différentiel (8) dont les entrées sont reliées, par l'intermédiaire de résistances (6, 7), avec les sorties (4, 5) du capteur (1), dont l'entrée ne subissant pas de changement de signe est en outre reliée, par l'intermédiaire d'une résistance (9), au potentiel de masse et dans la dérivation de circuit de contre-réaction duquel est disposé un réseau de résistances (10-14) comportant une résistance (14) fonction de la température,

   c) un second amplificateur différentiel (16), dont l'entrée ne subissant pas de changement de signe est reliée, par l'intermédiaire d'une résistance (15), avec la sortie du premier amplificateur différentiel (8), par l'intermédiaire d'une résistance (17), avec un diviseur (22, 23) de tension fonction de la température et, par l'intermédiaire d'une résistance (24), au potentiel de masse, et dont l'entrée subissant le changement de signe est reliée, par l'intermédiaire d'une résistance (18), avec le diviseur (22, 23) de tension fonction de la température et, par l'intermédiaire d'une résistance (19), avec une autre diviseur (20, 21) de tension, ainsi que par

   d) un embranchement de circuit en T, disposé en dérivation du circuit de contre-réaction du second amplificateur différentiel (16) et constitué de résistances (25, 26, 27).

2. Agencement de circuit selon la revendication 1, caractérisé par le fait que le réseau de résistances de la dérivation de circuit de contre réaction du premier amplificateur différentiel (8) est constitué d'un embranchement de circuit en T dans lequel une résistance (14), fonction de la température, et deux résistances (12, 13) réglables forment la branche longitudinale et une autre résistance (11) réglable forme la branche transversale.

3. Agencement de circuit selon la revendication 1 ou 2, caractérisé par le fait que les résistances (20, 21) de l'autre diviseur de tension sont réglables.

4. Agencement de circuit selon l'une des revendications 1 à 3, caractérisé par le fait que les résistances (25, 26, 27) de l'embranchement de circuit en T, disposé dans la dérivation de circuit de contre-réaction du second amplificateur différentiel (16) sont réglables.

5. Agencement de circuit selon l'une des revendications 1 à 4, caractérisé par le fait que le conducteur de l'alimentation (2) en tension et le conducteur (28) de sortie du signal compensé présentent chacun un condensateur (3, 29).

U

Temp. 2 < Temp. 1

Temp. 1

P

**Fig. 1**

**Fig. 2**